# EUROPEAN PATENT APPLICATION

(11) **EP 4 640 792 A1**
(43) Date of publication of application: **29.10.2025**
(21) Application number: 23905176.6
(22) Date of filing: 19.06.2023
(51) Int. Cl.: C09K 19/04, C09K 19/42, C09K 19/44, G02F 1/13, G02F 1/133, G02F 1/1333, G02F 1/139

(54) **LIQUID CRYSTAL COMPOSITION AND DIMMING DEVICE THEREOF**

(30) Priority: 20.12.2022 CN 202211640518
(71) Applicant: Bistable Optical Films Co., Ltd, Suzhou, Jiangsu 215500 (CN)
(72) Inventor: ZHANG, Hongwei, Suzhou, Jiangsu 215500 (CN); LI, Li, Suzhou, Jiangsu 215500 (CN); WANG, Fei, Suzhou, Jiangsu 215500 (CN); TANG, Jianhua, Suzhou, Jiangsu 215500 (CN); SHEN, Ximei, Suzhou, Jiangsu 215500 (CN)
(74) Representative: Serjeants LLP
(86) International application number: PCT/CN2023/100998
(87) International publication number: WO 2024/130990

(57) **Abstract**

**The present** invention relates to a liquid crystal composition, the liquid crystal composition comprising at least one liquid crystal compound of a general formula (I), at least one elastic constant regulator of a general formula (II), and at least one chiral compound. The present invention also relates to a dimming device having at least two stable states, at least one state allowing incident light to pass through substantially (transmissive state), and at least one state scattering incident light substantially (haze state). The transmissive state and the haze state may be switched by means of an external electric field without the need for continuously maintaining a power connection. The transmissive state is clear and highly transmissive, while the haze state provides privacy shielding. The present invention, by means of introducing a bimesogenic compound, and adjusting the helical pitch P of the liquid crystal composition system such that P ≤ 3.5 µ m, improves the uniformity of a molecular plane arrangement of the liquid crystal composition and reduces texture defects, thereby lowering the haze of the dimming device containing the liquid crystal composition in the transmissive state, while increasing the haze thereof in the haze state.

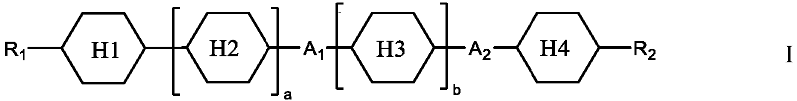

R3-MG1-Y1-X-Y2-MG2-R4 II

## Description

### TECHNICAL FIELD

The invention relates to the field of liquid crystals, and more particularly to a liquid crystal composition and a light modulating device comprising the same.

### BACKGROUND

There exist three main classes of light modulating technologies: electrochromic, suspended particle devices, and liquid crystal light modulating technology. Liquid crystal modulating technology mainly includes polymer dispersed liquid crystal (PDLC), multi-stable liquid crystal and dye-doped liquid crystal, etc. Similar to electrochromic and suspended particle devicetechnology, dye-doped liquid crystal technology cannot provide privacy protection in low-light environments at night. While PDLC and multistable liquid crystals both have scattering states such that they can provide shielding effect for privacy. PDLC is in a mono-stable state, which requires continuous power to maintain a state. Futhermore PDLC has a limited viewing angle. Multi-stable liquid crystals refer to liquid crystals that possess at least two stable states in the absence of an electric field. They are energy-efficient and safe, making them more suitable for a broad range of applications.

In the foggy state, liquid crystal molecules exist in a polydomain form, where molecules within a domain are mostly ordered, but disordered between domains, scattering incident light. Under suitable interface conditions, the scattering state can remain stable. The size and state of the domains are the key to the foggy state's haze and stability. Our research shows that as the helical pitch increases, the initial haze of the foggy state experiences an initial decay, and the stability of the foggy state weakens, leading to a significant reduction in haze over time. Additionally, when the helical pitch is too large, domain structures are difficult to form, preventing a stable scattering state and ultimately losing the stable foggy (scattering) state under zero electric field.

Therefore, there is a need to provide a liquid crystal composition and its light modulating device to resolve the above-discussed limitations.

### SUMMARY

To achieve the objectives of the present invention, the application proposes boundary conditions for maintaining the bistable characteristics of a cholesteric liquid crystal composition: the liquid crystal composition's birefringence Δn ≥ 0.15, and the helical pitch (Pitch) P ≤ 3.5 µm.

In one aspect, the present invention provides a cholesteric liquid crystal composition, comprising: at least one nematic liquid crystal composition, at least one chiral compound, and at least one elastic constant adjuster, where the liquid crystal composition's birefringence Δn ≥ 0.15, and the helical pitch P ≤ 3.5 µm.

Wherein, the nematic liquid crystal composition is selected from at least one of the formula I:

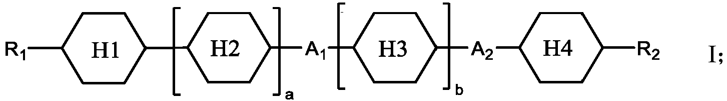

The elastic constant adjuster is selected from at least one of the formula II:

R3-MG1-Y1-X-Y2-MG2-R4 II;

wherein,
R1 and R2 each independently represent -CN, -Cl, -NCS, or an chain alkyl group with 1-25 carbon atoms where one or more nonadjacent -CH₂- groups in the chain alkyl group may be independently replaced by -O-, -S-, -NH-, -N(CH₃)-, -CO-, -COO-, -OCO-, -OCOO-, -SCO-, - COS-, -CH=CH-, -CH=CF-, -CF=CF-, or -C≡C-, and one or more H atoms in the chain alkyl group may be independently replaced by -CN or -CH₃,
A1 and A2 each independently represent -COO-, -OCO-, -OCOO-, -OCH₂-, -CH₂O-, -CF₂O-, -(CH₂)₂-, -C≡C-, -CH=CH-, -CF₂CF₂-, -CF=CF-, -CH=CH-COO-, -OCO-CH=CH-, or a single bond,
H1-H4 each independently represent a first ring structure , which consists of at least one of the following: 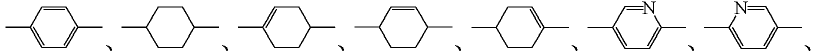 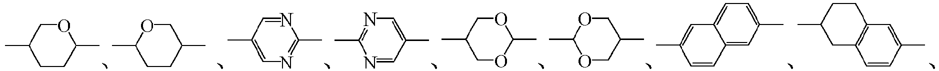 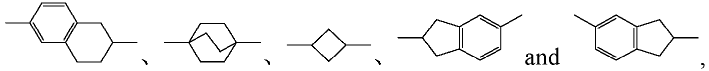 and one or more H atoms in the first ring structure may be independently replaced by halogen, a chain alkyl group with 1 to 10 C atoms or ester group,
a represents 0 or 1,
b represents 0, 1, or 2,
R3 and R4 each independently represent -H, -Cl, -CN, -NCS or a chain alkyl group with 1 to 25 C atoms where one or more H atoms may be independently substituted by halogen or CN and one or more nonadjacent -CH₂- may be independently replaced by-O-, -S-, -NH-, -N(CH₃)-, -CO-, -COO-, -OCO-, -OCOO-, -SCO-, -COS-, -CH=CH-, -CH=CF-, -CF=CF- or - C≡C- in such a manner that two -O- are not directly adjacent to one another,
X is a straight-chain alkyl group with 1, 3 or 5-40 C atoms or a branched alkyl group with 3 or 5-40 C atoms where one or more nonadjacent -CH2- may be independently replaced by - O-, -S-, -NH-, -N(CH3)-, -CO-, -COO-, -OCO-, -OCOO-, -SCO-, -COS-, -CH=CH-, -CH=CF-, -CF=CF-, -C≡C- or -CH(CN)- in such a manner that no two -O- are adjacent to one another or no two groups selected from -OCO-, -SCO-, -OCOO-, -COS-, -COO- and - CH=CH- are adjacent to each other,
Y1 and Y2 each independently represent -O-, -CH=CH-, -CF₂O-, -OCF2-, -CF2CF2- or a single bond, and
MG1 and MG2 each independently represent a mesogenic group.

In some embodiments of the present invention, the mesogenic group is selected from the group of formula III 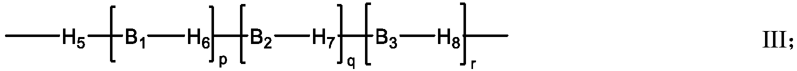 wherein,
H5-H8 each independently represent a second ring structure, which consists of at least one of the following: 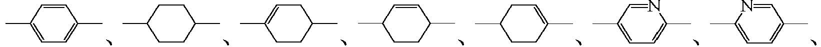 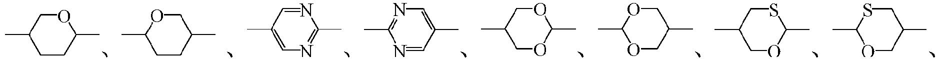 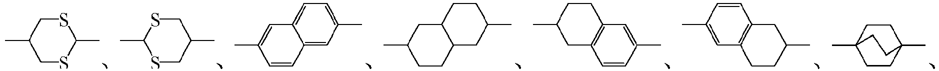 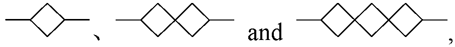 and 1-4 H atoms in the second ring structure may be independently replaced by halogen, CN or a chain alkyl group with 1-7 C atoms where at least one -CH₂- may be replaced by -CHO-, -CO-, -COO- or -OCO- and at least one H atom may be substituted by F or Cl,
B1, B2 and B3 each independently represent -OCOO-, -OCH₂-, -CH₂O-, -CF₂O-, -(CH₂)₂-, -(CH₂)₄-, -C≡C-, -CH=CH-, -CF₂CF₂-, -CF=CF-, -CH=CH-COO-, -OCO-CH=CH- or a single bond,
p, q and r is 0 or 1.

Further, as a preferred embodiments, the nematic liquid crystal composition is selected from at least one compound or a combination of compounds of formulas IV, V, and VI:

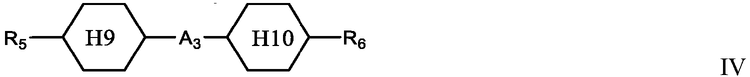

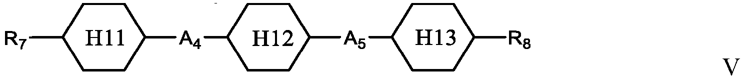

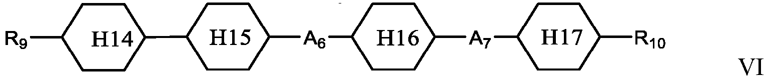

Further, as a preferred embodiments, the elastic constant adjuster is selected from at least one compound or a combination of compounds of formulas VII and VIII,

R11-MG3-(CH₂)n-MG4-R12 VII;

R13-MG5-O-(CH₂)n-O-MG6-R14 VIII;

wherein,
R5-R10 each independently represent -CN, -Cl, -NCS, or an chain alkyl group with 1-25 carbon atoms where one or more nonadjacent -CH₂- groups in the chain alkyl group may be independently replaced by -O-, -S-, -NH-, -N(CH₃)-, -CO-, -COO-, -OCO-, -OCOO-, -SCO-, -COS-, -CH=CH-, -CH=CF-, -CF=CF- or -C≡C-, and one or more H atoms in the chain alkyl group may be independently replaced by -CN or -CH₃,
A3-A7 each independently represent -COO-, -OCO-, -OCOO-, -OCH₂-, -CH₂O-, -CF₂O-, -(CH₂)₂-, -C≡C-, -CH=CH-, -CF₂CF₂-, -CF=CF-, -CH=CH-COO-, -OCO-CH=CH- or a single bond,
H9-H17 each independently represent a first ring structure , which consists of at least one of the following: 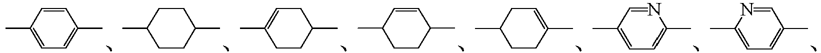 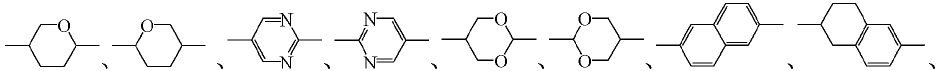 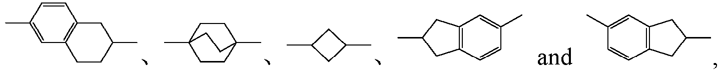 and one or more H atoms in the first ring structure may be independently replaced by halogen, a chain alkyl group with 1 to 10 C atoms or ester group,
R11-R14 each independently represent -H, -Cl, -CN, -NCS or a chain alkyl group with 1 to 25 C atoms where one or more H atoms may be independently substituted by halogen or CN and one or more nonadjacent -CH₂- may be independently replaced by -O-, -S-, -NH-, -N(CH₃)-, -CO-, -COO-, -OCO-, -OCOO-, -SCO-, -COS-, -CH=CH-, -CH=CF-, -CF=CF- or -C ≡C- in such a manner that two -O- are not directly adjacent to one another,
MG3-MG6 each independently represent a mesogenic group,
n is an odd number between 3-15.

In some embodiments of the present invention, the mesogenic groups represented by MG3-MG6 are selected from the group consisting of mesogenic groups of formula IX, 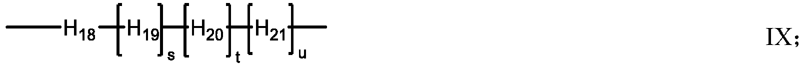 wherein,
H18-H21 each independently represent a second ring structure, which consists of at least one of the following: 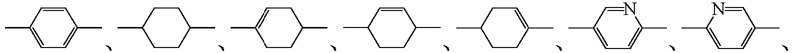 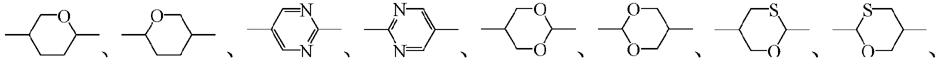 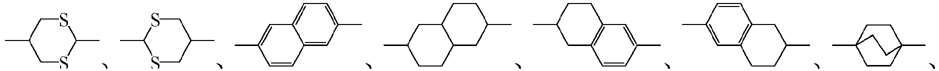 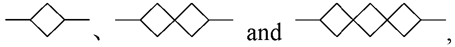 and 1-4 H atoms in the second ring structure may be independently replaced by halogen, CN or a chain alkyl group with 1-7 C atoms where at least one -CH₂- may be replaced by -CHO-, -CO-, -COO- or -OCO- and at least one H atom may be substituted by F or Cl,
s, t and u is 0 or 1.

In some embodiments of the invention, the chiral compound accounts for 0.1-20% of the total mass of the liquid crystal composition.

In some embodiments of the invention, the liquid crystal composition further includes at least one dichroic dye.

In another aspect, to achieve the objectives of the invention, the invention provides a liquid crystal light modulating device, including a first transparent conductive base layer, a second transparent conductive base layer, and a liquid crystal layer disposed between the first transparent conductive base layer and the second transparent conductive base layer. The first transparent conductive base layer includes a first transparent substrate and a first transparent conductive layer adjacent to the liquid crystal layer. The second transparent conductive base layer includes a second transparent substrate and a second transparent conductive layer adjacent to the liquid crystal layer. The liquid crystal layer includes a liquid crystal composition, which is a cholesteric liquid crystal with a helical pitch P ≤ 3.5 µm. The cholesteric liquid crystal includes an elastic constant adjuster. The direction of the liquid crystal molecules of the liquid crystal layer changes when a voltage is applied between the first transparent conductive base layer and the second transparent conductive base layer. The change in the arrangement of liquid crystal molecules in the liquid crystal layer results in changes in the propagation characteristics of light incident on the liquid crystal layer, including transmission, scattering, and reflection. The alignment state of the liquid crystal molecules has at least two stable states that remain substantially stable after the voltage is removed. At least one of the stable states is a transparent state, where light incident on the liquid crystal layer is transmitted, and at least one of the stable states is a foggy state, where light incident on the liquid crystal layer is scattered.

The haze of the transparent state is no more than 10%, and the haze of the foggy state is no less than 80%, with the absolute change in haze stability not exceeding 10%.

In the transparent state, the liquid crystal molecules are basically ordered, forming a generally uniform planar state with a helical structure. This results in low scattering of incident light, allowing the device to exhibit a high-transparency state dominated by light transmission. In the foggy state, the liquid crystal molecules exist in domains. When an external electric field is applied, due to the inter-molecular interaction of the liquid crystal molecules, multiple molecular domains with chaotic orientations can form. Within each domain, the liquid crystal molecules still maintain a basically ordered helical arrangement, while the orientations between the domains are largely disordered. When the external electric field is removed, this polydomain disordered molecular arrangement can be maintained for a long time, forming a stable foggy multi-domain focal conic state of liquid crystal molecular arrangement. The polydomain structure of the liquid crystal molecules can strongly scatter incident light.

As discussed above, in the foggy state, the liquid crystal molecules exist in polydomain form, where the molecules are essentially ordered within each domain but disordered between domains. For light incident on this structure, the foggy scattering state can be stably maintained under suitable interfacial conditions. Key factors determining the haze and stability of the foggy state are the interfacial conditions, driving conditions, and the intrinsic properties of the material. From the perspective of material properties, the state of the domains and the birefringence of the liquid crystal composition are crucial factors affecting the haze and stability of the foggy state. Among these, the domain structure state is closely related to chiral compounds which are fundamental to the formation of a helical structure. Research has found that when the helical pitch (P) is ≥2 µm, as the helical pitch increases, the initial haze of the foggy state gradually decreases, and the stability of the foggy state weakens, leading to a significant reduction in haze after a certain period. Additionally, it has been observed that when the helical pitch is too large, domain structures become difficult to form, preventing the establishment of a stable scattering state and ultimately causing the loss of the foggy state. To achieve the objectives of this invention, it is essential to control the liquid crystal composition's helical pitch P ≤ 3.5 µm. The helical pitch (P) can be adjusted by the concentration of chiral compounds, following the formula P=1/(HTP *c), where HTP is the helical twisting power of the chiral compound, and c is the mass concentration of the chiral compound in the liquid crystal composition. Under suitable interfacial and driving conditions, and with an appropriate helical pitch, the foggy focal conic texture of the liquid crystal layer can be stably maintained. Upon application of an electric field during the switching to the focal conic state, liquid crystal molecules rapidly form a metastable polydomain configuration. Subsequently, under the combined influence of interfacial conditions, this metastable state is stabilized, and the haze of the foggy state is maintained at a certain level, allowing it to remain stable thereafter. For the purpose of evaluation, we define haze stability as the absolute change in haze between the haze measured at least 5 minutes after switching to the FC state and the initial haze at the moment of switching.

The birefringence Δn of liquid crystal composition significantly affects haze level and stability of the foggy state. The larger the Δn, the stronger the scattering effect, and the higher the haze of the foggy state. When Δn is low, the scattering effect is poor, and privacy protection cannot be achieved. The birefringence of the liquid crystal is defined as Δn=ne-no, where no represents the ordinary refractive index and ne represents the extraordinary refractive index of the liquid crystal. To measure the birefringence of the liquid crystal, a relatively stable alignment of the liquid crystal director must first be obtained. Measuring the birefringence of liquid crystal requires first obtaining a relatively stable alignment of liquid crystal directors. The invention discloses a cholesteric liquid crystal composition comprisingat least one nematic liquid crystal composition, at least one chiral compound, and at least one elastic constant adjuster. Since the cholesteric liquid crystal composition exhibits a scattering state in their unaligned form, even with interface alignment, it is difficult to obtain a liquid crystal director perpendicular to the measurement substrate due to the high energy required to unwind the helix, making it impossible to measure no and ne. To evaluate the birefringence of the liquid crystal composition, we can measure the Δn of the included nematic liquid crystal composition by coating a vertical alignment agent on the measurement substrate near the liquid crystal side to obtain a liquid crystal director substantially perpendicular to the measurement substrate, thereby measuring no. By placing a polarizer in the eyepiece and rotating it 90°, ne can be measured.

During the transition from the focal conic state to the planar state, a homeotropic state is experienced, where the helical structure of the liquid crystal molecules unwinds, and the liquid crystal director is substantially parallel to the electric field direction. After the electric field is removed, the liquid crystal molecules undergo a brief relaxation process back to the planar state, during which the helical pitch changes from zero, through an intermediate state with a pitch P', to the natural pitch P, and the intermediate state during this relaxation process is a metastable state and its pitch is approximately given by P' ≈K22/K33*P. To shorten the time from the induced helical pitch P' to the natural pitch P, it is necessary to have ratio of between P' and P near 1, meaning the preferred ratio between K33 and K22 is near 1. To achieve this objective, an elastic constant adjuster with relatively a low K33 to K22 ratio values is used to adjust the elastic constants of the liquid crystal composition, thereby shortening the relaxation time and achieving a planar state with little defects.

The elastic constant adjuster is a bimesogenic compound with two mesogenic groups that induce a nematic phase, and the two mesogenic groups are interconnected by a flexible chain, forming a banana-shaped molecular configuration. The elastic constant adjuster exhibits a relatively low K22 and an exceptionally low K33, enabling precise modulation of elastic constants in liquid crystal mixtures.

In this application, as a preferred embodiment, the nematic liquid crystal composition includes one or more compounds selected from the group consisting of the following compounds:

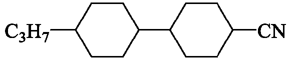

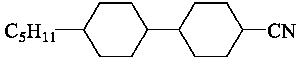

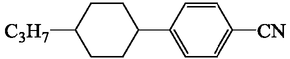

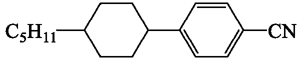

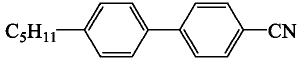

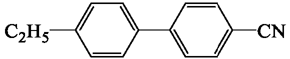

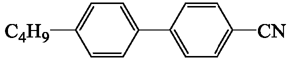

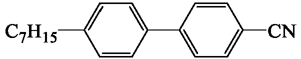

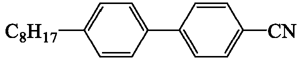

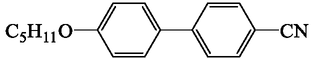

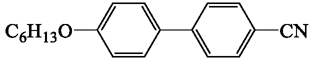

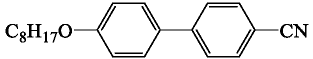

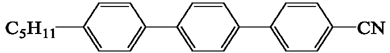

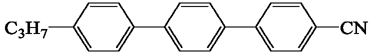

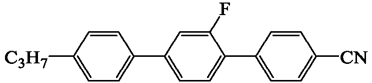

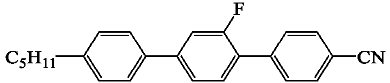

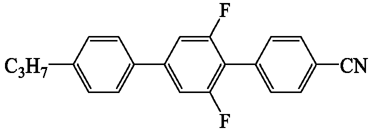

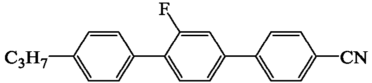

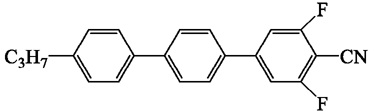

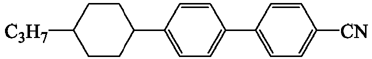

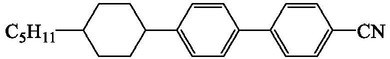

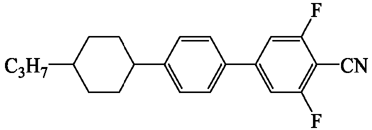

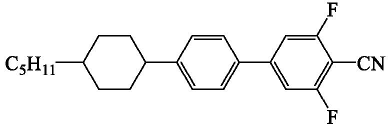

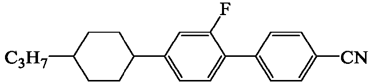

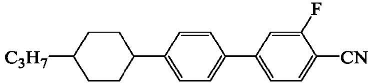

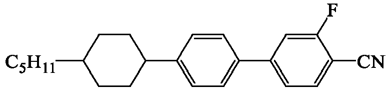

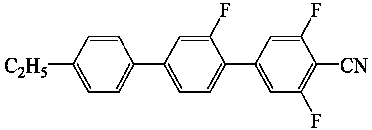

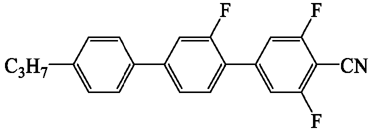

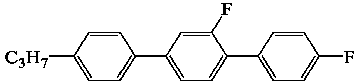

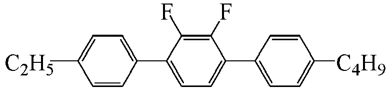

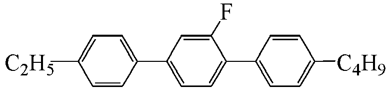

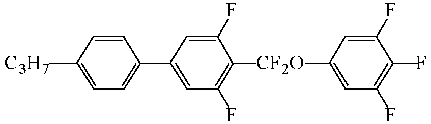

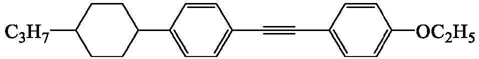

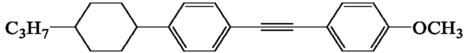

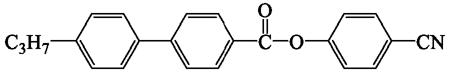

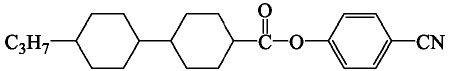

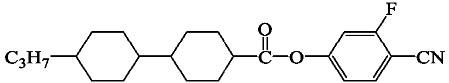

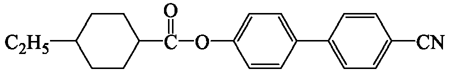

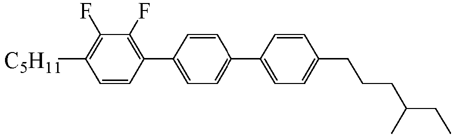

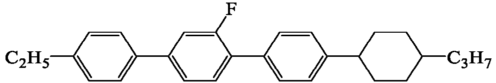

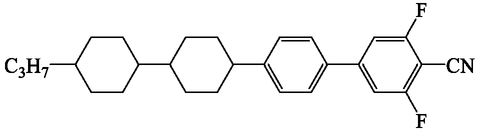

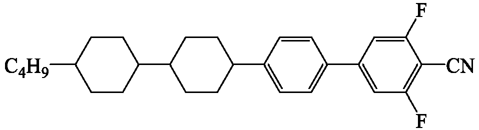

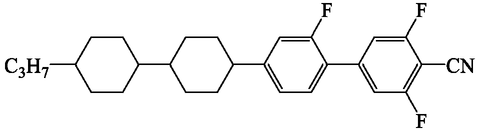

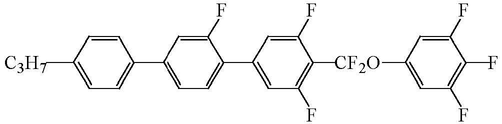

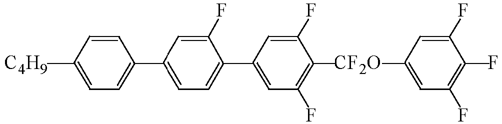

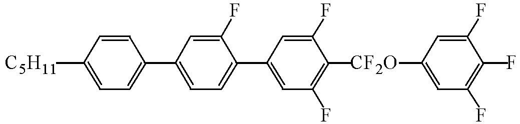

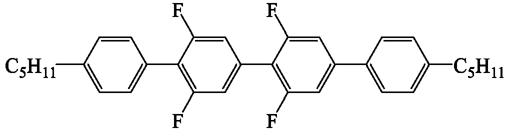

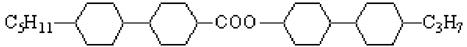

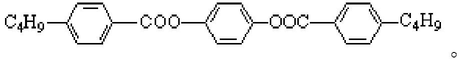

In this invention, as a preferred embodiment, the elastic constant adjuster is selected from one or more of the following compounds:

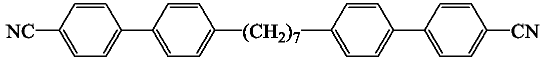

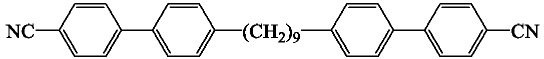

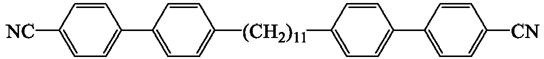

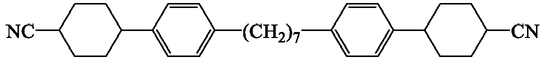

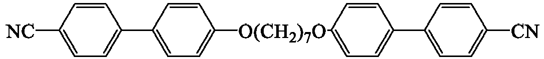

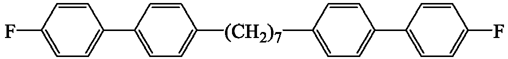

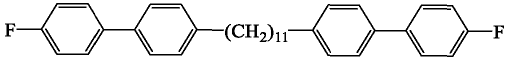

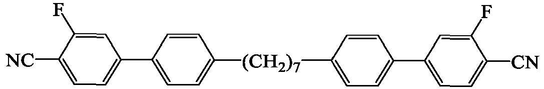

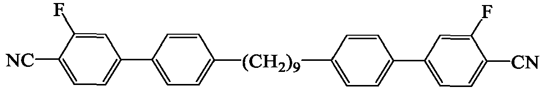

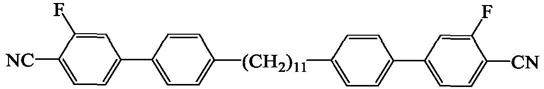

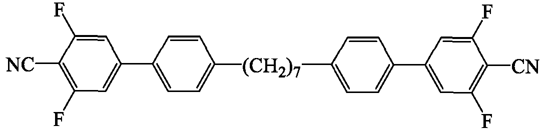

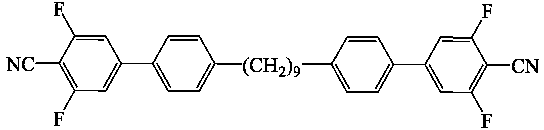

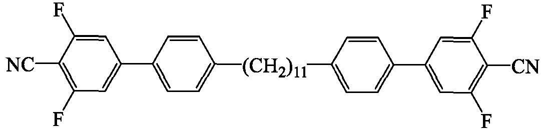

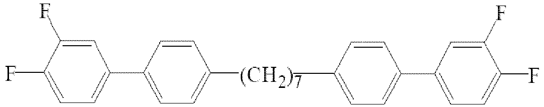

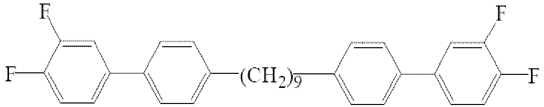

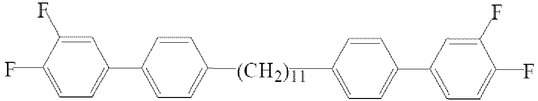

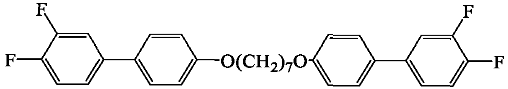

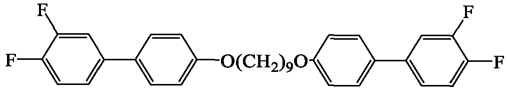

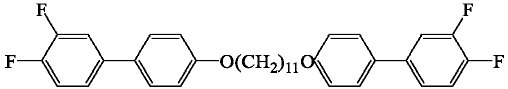

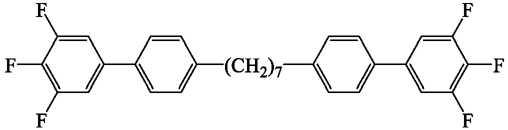

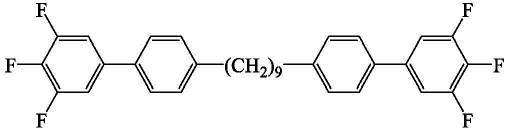

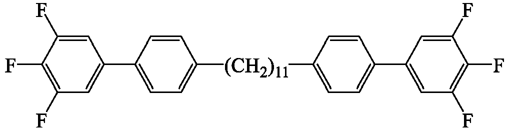

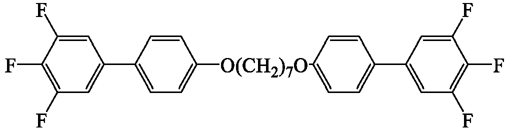

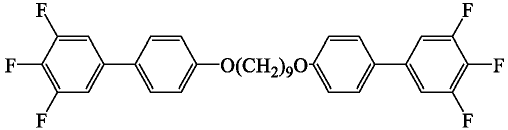

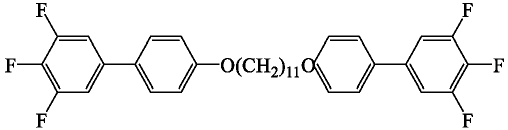

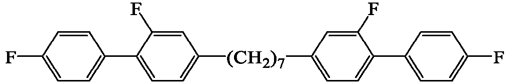

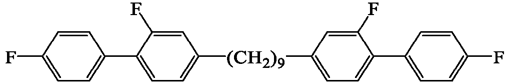

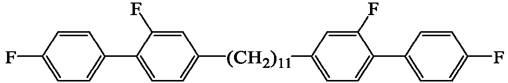

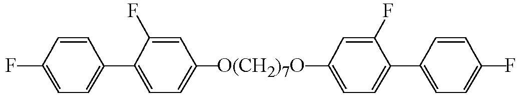

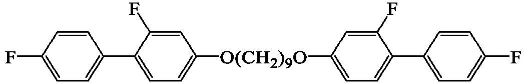

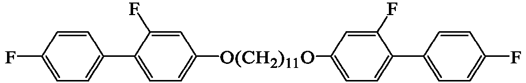

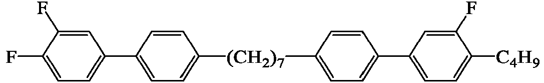

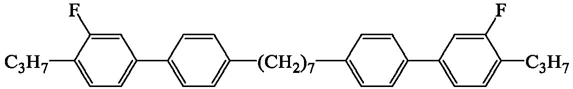

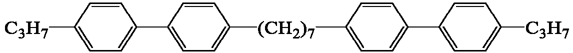

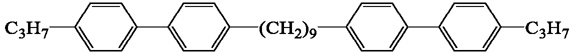

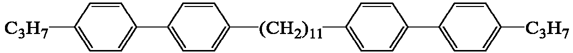

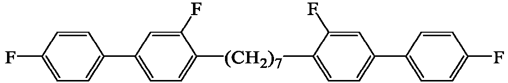

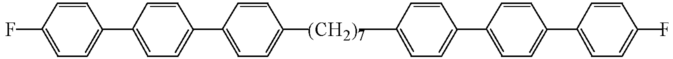

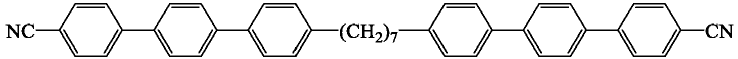

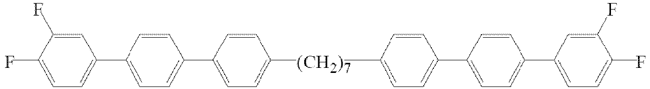

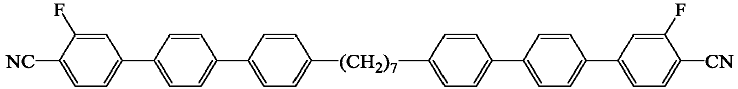

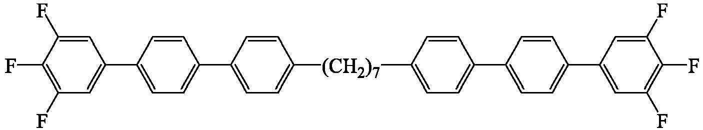

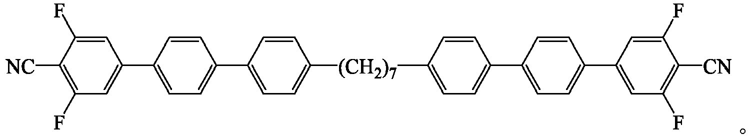

In this invention, as a preferred embodiment, the chiral compound is selected from one or more of the following compounds:

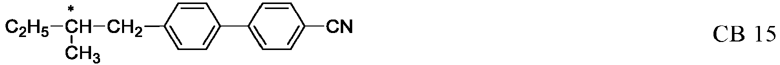

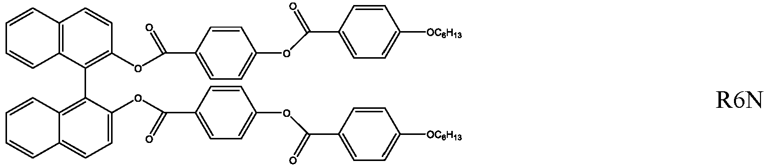

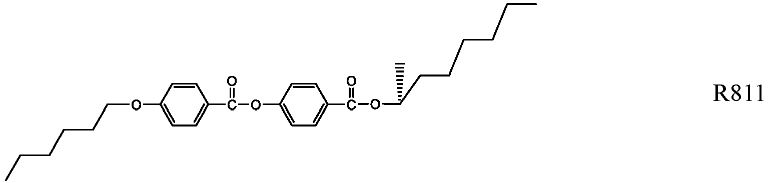

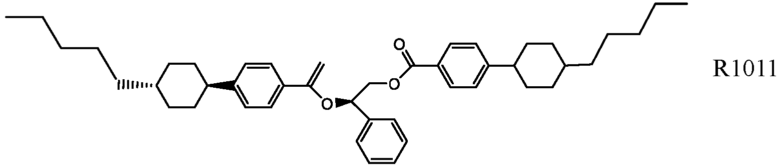

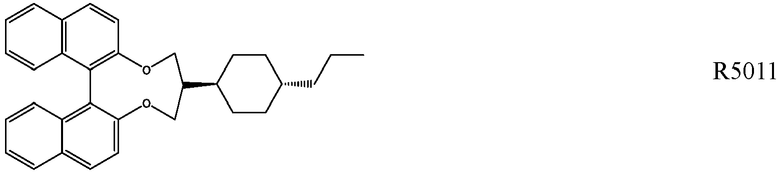

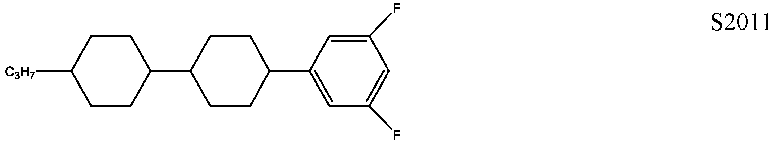

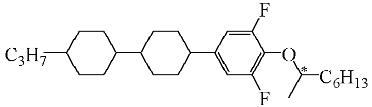

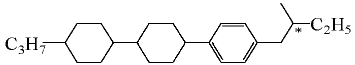

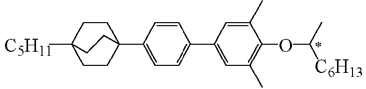

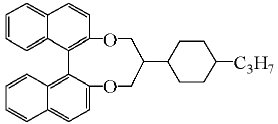

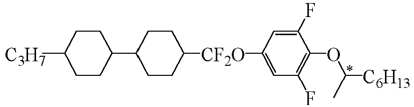

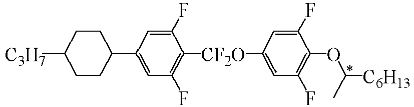

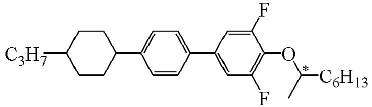

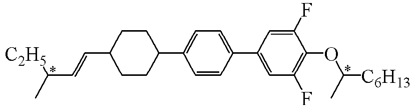

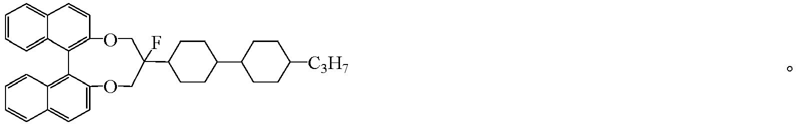

In the embodiments of the invention, the compound of formula I accounts for 30%-90% of the total mass of the liquid crystal composition; preferably, the compound of formula I accounts for 40-80% of the total mass of the liquid crystal composition; more preferably, the compound of formula I accounts for 50-80% of the total mass of the liquid crystal composition.

In the embodiments of the invention, the compound of formula II accounts for 10%-50% of the total mass of the liquid crystal composition; preferably, the compound of formula II accounts for 20-40% of the total mass of the liquid crystal composition; more preferably, the compound of formula II accounts for 25-35% of the total mass of the liquid crystal composition.

In the embodiments of the invention, the chiral compound accounts for 0.1%-30% of the total mass of the liquid crystal composition; preferably, the chiral compound accounts for 0.1%-20% of the total mass of the liquid crystal composition.

### Beneficial Effects:

The invention provides a liquid crystal composition applicable to light modulating devices. By introducing a bimesogenic compound and adjusting the helical pitch of the liquid crystal system to P ≤ 3.5 µm, the uniformity of the planar arrangement of the liquid crystal composition is improved and textured defects are reduces, thereby reducing the haze of the light modulating device in the transparent state while increasing the haze in the foggy state.

### BRIEF DESCRIPTION OF THE DRAWINGS

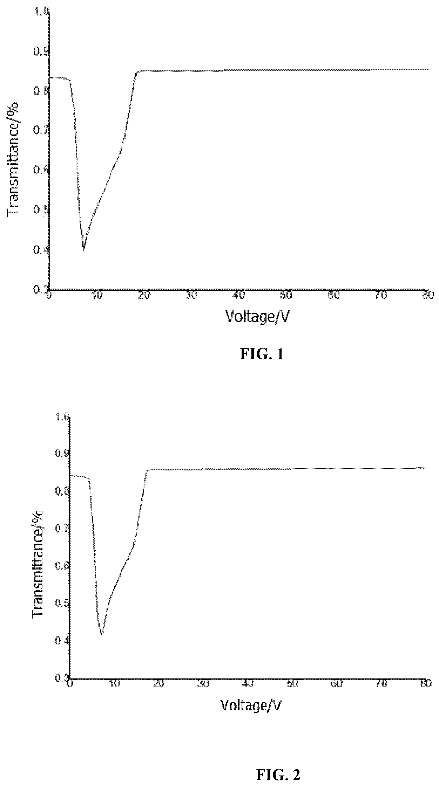

Figure 1 shows the voltage-transmittance (VT) curve of the light modulating device prepared with the liquid crystal composition of Comparative Example 1;
Figure 2 shows the voltage-transmittance (VY) curve of a light modulating device prepared with the liquid crystal composition of Comparative Example 2;

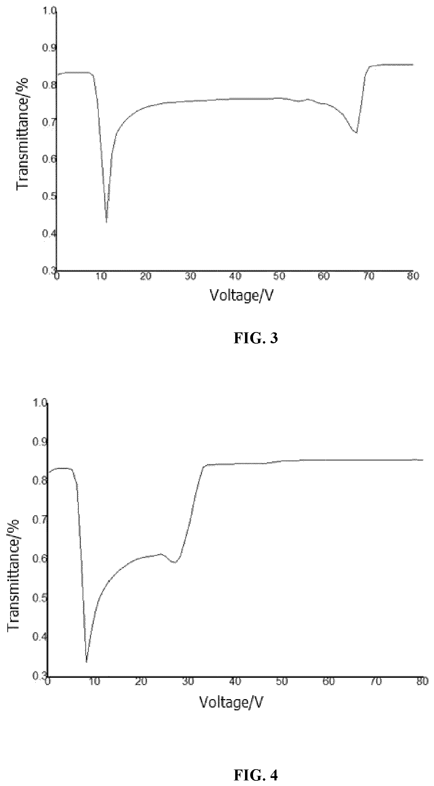

Figure 3 shows the voltage-transmittance (VT) curve of a light modulating device prepared with the liquid crystal compositions of Example 1;
Figure 4 shows the voltage-transmittance (VT) curve of the light modulating device prepared with the liquid crystal composition of Example 2;

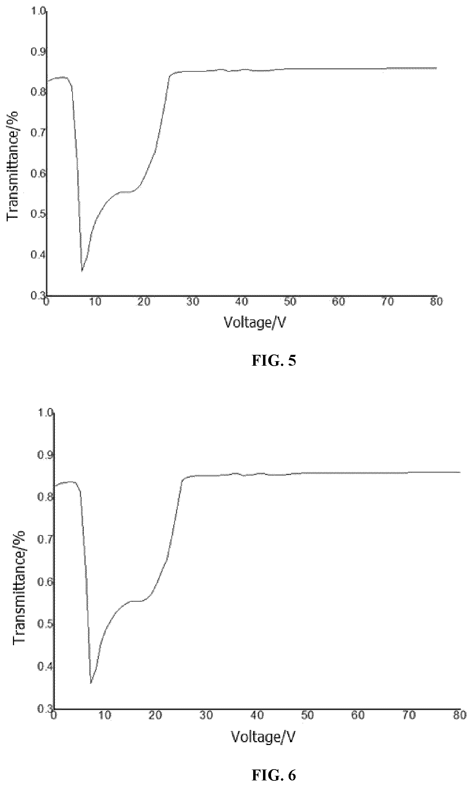

Figure 5 shows the voltage-transmittance (VT) curve of the light modulating device prepared with the liquid crystal composition of Example 3;
Figure 6 shows the voltage-transmittance (VT) curve of the light modulating device prepared with the liquid crystal composition of Example 4;

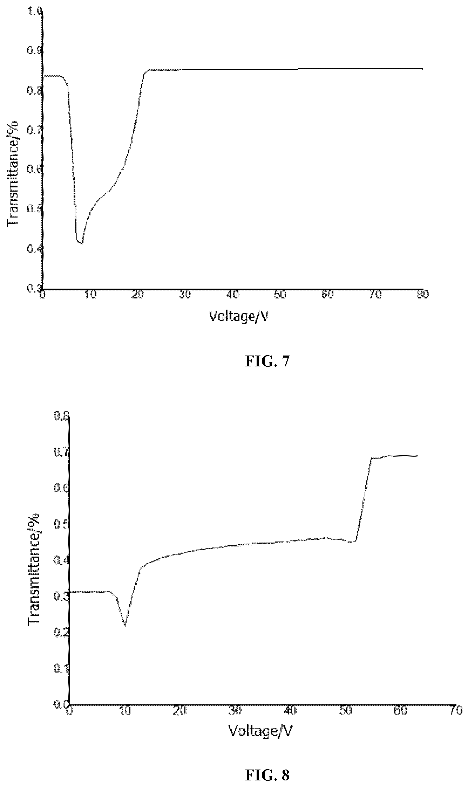

Figure 7 shows the voltage-transmittance (VT) curve of the light modulating device prepared with the liquid crystal composition of Example 5;
Figure 8 shows the voltage-transmittance (VT) curve of the light modulating device prepared with the liquid crystal composition of Example 6;

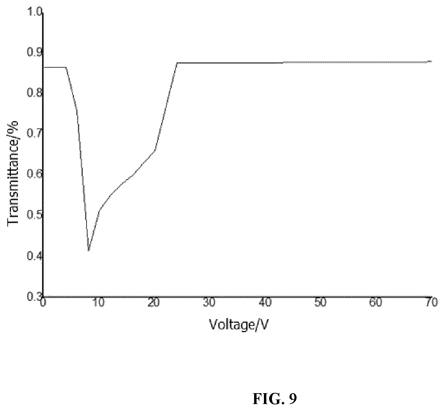

Figure 9 shows the voltage-transmittance (VT) curve of the lght modulating device prepared with the liquid crystal composition of Example 7.

### DETAILED DESCRIPTION OF EMBODIMENTS

In the following description, for the purpose of explanation and to provide a comprehensive understanding of the invention, numerous specific details are set forth. However, it will be apparent to those skilled in the art that the invention can be practiced without these specific details. In other instances, well-known structures and devices are shown in block diagram form. In this regard, the illustrative example embodiments are provided for illustration only and do not limit the invention. Therefore, the scope of protection of the invention is not limited by the specific embodiments described above, but is defined by the appended claims.

The various components used in the following examples can be synthesized by known methods or obtained commercially. These synthesis techniques are conventional, and the resulting liquid crystal compounds meet the standards for electronic compounds.

In this invention, and particularly in the following examples, the group structures in the liquid crystal composition are coded; Table 1 shows the group structures and codes for nematic liquid crystal composition and bimesogenic compounds.

**TABLE 1 group structures and codes for liquid crystal composition**

| Code | Group structure |
|---|---|
| P | 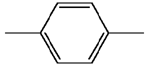 |
| C | 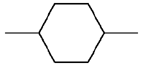 |
| G | 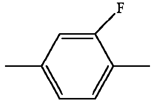 |
| P(2-F) | 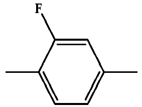 |
| U | 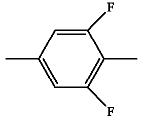 |
| P(2,2-F) | 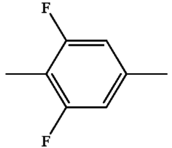 |
| N | -C≡N |
| T | -C≡C- |
| V | -C=C- |
| Q | -CF₂O- |
| O | -O- |
| F | -F |
| n | -CₙH₂ₙ₊₁ |

Among them, "5PPN", according to the naming principles in Table 1, corresponds to the structure:

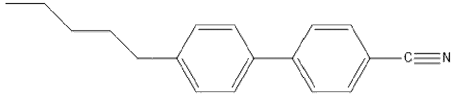

"n=3", according to the naming principles in Table 1, corresponds to the structure: -C₃H₇.

The dichroic dyes in the examples are selected from commercially available dichroic dyes from BASF.

To verify that the technical solution provided in this invention has excellent technical effects, this invention provides 3 groups of liquid crystal compositions as comparative examples and 8 groups of liquid crystal compositions as examples. These liquid crystal compounds are made into corresponding liquid crystal light modulating devices, and their performance is tested.

### (1) Preparation of Liquid Crystal Compositions

Prepare the liquid crystal compositions according to the ratios specified in the following examples. The preparation of the liquid crystal compositions is carried out according to conventional methods in the field. First, weigh the component compounds according to the corresponding mass percentages, place the liquid crystal composition in a glass sample bottle, add a magnetic stirrer, and place it on a heating magnetic stirrer. Heat and stir until the liquid crystal composition in the sample bottle is completely dissolved, forming an isotropic transparent solution. At this point, the temperature has reached the clearing point of the liquid crystal composition. Maintain this temperature and continue heating and stirring for 60 minutes to ensure the sample is uniformly mixed. Stop heating and continue stirring for 2 hours.

### (2) Structure of the Light Modulating Device

The liquid crystal light modulating device includes a first transparent conductive base layer and a second transparent conductive base layer, which are parallel and opposite to each other to form a liquid crystal cell. Cell gap of the liquid crystal cell is controlled by spacer materials, and the support structure is spherical polystyrene spacers, accounting for 0.2 wt% of the liquid crystal composition. The transparent conductive base layer is ITO transparent conductive glass, and the alignment layer is VA type, oriented by rubbing. The liquid crystal layer filled between the first transparent conductive base layer and the second transparent conductive base layer includes the aforementioned liquid crystal composition, which may contain dichroic dyes. The content of dichroic dyes is selected according to the transmittance requirements.

### (3) VT (Voltage-Transmittance) Curve Measurement Method

The liquid crystal composition is vacuum-injected into each liquid crystal cell. After sealing, the devices is driven to the planar state. The voltage-transmittance (VT) curve is measured using photoelectric testing equipment under the following conditions: 100 Hz square wave, voltage range of 0-80 V with 2 V step increments.

### (4) Haze Measurement Method

The liquid crystal composition is vacuum-injected into each liquid crystal cell. After sealing, the devices is maintained at 25°C for over 30 minutes to reach thermal equilibrium before testing. First, turn on the WGT-S haze meter, and start testing after the light source stabilizes for 30 minutes. Pulse voltages are applied to drive the device into planar state and focal conic state respectively, and the transmittance and haze values are then measured using the WGT-S haze meter, accompanied by visual observation of optical phenomena.

Comparative Example 1 (Example 1 of CN109825309B, with the helical pitch adjusted. To minimize the impact of changes in the electro-optical properties of the liquid crystal composition on haze and stability, a non-chiral CB 15 with the same phase transition temperature, birefringence, and dielectric constant as CB15 is used for helical pitch adjustment).

| Component | Code | Ratio/wt% | Parameters of the liquid crystal cell and its performance data |
|---|---|---|---|
| Nematic Liquid Crystal Composition | 5PPN | 14 | Helical Pitch=4 µm |
| | 2PPN | 4.9 | |
| | 5OPPN | 10.8 | |
| | 6OPPN | 5.1 | |
| | 3PGPN | 10.8 | |
| | 5CPPN | 5.7 | |
| | 5PPPN | 2.7 | Nematic Liquid Crystal Composition: Δn=0.249 |
| | Non-chiral CB15 | 12 | |
| Elastic Constant Adjuster | NPP7PPN | 25 | |
| | NPPO7OPPN | 5 | |
| Chiral Compound | CB15 | 4 | |
| | Total | 100 | |

### Comparative Example 2 (Example 2 of CN109825309B)

| Component | Code | Ratio/wt% | Parameters of the liquid crystal cell and its performance data |
|---|---|---|---|
| Nematic Liquid Crystal Composition | 5PPN | 14.6 | Helical Pitch=10 µm |
| | 2PPN | 5.0 | |
| | 5OPPN | 11.2 | Nematic Liquid CrystalComposition: Δn=0.250 |
| | 6OPPN | 5.3 | |
| | 3PGPN | 11.2 | |
| | 5CPPN | 5.9 | |
| | 5PPPN | 2.8 | |
| | Non-chiral CB15 | 14.5 | |
| Elastic Constant Adjuster | NPP7PPN | 28 | |
| Chiral Compound | CB15 | 1.5 | |
| | Total | 100 | |

### Comparative Example 3

| Component | Code | Ratio/wt% | Parameters of the liquid crystal cell and its performance data |
|---|---|---|---|
| Nematic Liquid Crystal Composition | 3CCV | 28 | Helical Pitch=1 µm |
| | E7 | 13.5 | |
| | Non-chiral CB15 | 14.5 | Nematic Liquid Crystal Composition: Δn=0.130 |
| Elastic Constant Adjuster | NPP7PPN | 28 | |
| Chiral Compound | CB15 | 16 | |
| | Total | 100 | |

### Example 1

| Component | Code | Ratio/wt% | Parameters of the liquid crystal cell and its performance data |
|---|---|---|---|
| Nematic Liquid Crystal Composition | 5CPN | 13 | Helical Pitch=1 µm |
| | 2CPN | 5 | |
| | 5OPPN | 11 | |
| | 6OPPN | 5 | |
| | 3PGPN | 11 | |
| | 5CPPN | 6 | Nematic Liquid Crystal Composition: Δn=0.207 |
| | 5PPPN | 3 | |
| Elastic Constant Adjuster | NPP7PPN | 20 | |
| | NPP9PPN | 10 | |
| Chiral Compound | CB15 | 16 | |
| | Total | 100 | |

### Example 2

| Component | Code | Ratio/wt% | Parameters of the liquid crystal cell and its performance data |
|---|---|---|---|
| | 5PPN | 10 | Helical Pitch=2 µm |
| | 2PPN | 5 | |
| | 5OPPN | 10 | |
| | 6OPPN | 5 | |
| Nematic Liquid Crystal Composition | 3PGPN | 10 | |
| | 3PP(2-F)PN | 5 | |
| | 5CPPN | 6 | Nematic Liquid Crystal Composition: Δn=0.260 |
| | 5PPPN | 3 | |
| | Non-chiral CB15 | 11.5 | |
| Elastic Constant Adjuster | NPP7PPN | 20 | |
| | NPPO7OPPN | 10 | |
| Chiral Compound | R811 | 4.5 | |
| | Total | 100 | |

### Example 3

| Component | Code | Ratio/wt% | Parameters of the liquid crystal cell and its performance data |
|---|---|---|---|
| | 5PPN | 10 | Helical Pitch=2.5 µm |
| | 2PPN | 5 | |
| | 5OPPN | 10 | |
| Nematic Liquid Crystal Composition | 6OPPN | 5 | |
| | 3PGPN | 10 | |
| | 5CPPN | 5 | Nematic Liquid Crystal Composition: Δn=0.251 |
| | 5PPPN | 3 | |
| | 3CPTPO2 | 6 | |
| | Non-chiral CB15 | 14.6 | |
| Elastic Constant Adjuster | NPP7PPN | 20 | |
| | 3PP7PP3 | 5 | |
| | 3CP7PC3 | 5 | |
| Chiral Compound | R1011 | 1.4 | |
| | Total | 100 | |

### Example 4

| Component | Code | Ratio/wt% | Parameters of the liquid crystal cell and its performance data |
|---|---|---|---|
| | 5PPN | 11 | Helical Pitch=3 µm |
| | 2PPN | 5 | |
| | 5OPPN | 10 | |
| | 6OPPN | 5 | |
| Nematic Liquid Crystal Composition | 3PP(2-F)PN | 10 | |
| | 5CPPN | 6 | |
| | 5PPPN | 5 | Nematic Liquid Crystal |
| | 3PGUQUF | 2 | Composition: Δn=0.248 |
| | Non-chiral CB15 | 15.4 | |
| Elastic Constant Adjuster | NPP7PPN | 20 | |
| | NGP9PP(2-F)N | 10 | |
| Chiral Compound | R6N | 0.6 | |
| | Total | 100 | |

### Example 5

| Component | Code | Ratio/wt% | Parameters of the liquid crystal cell and its performance data |
|---|---|---|---|
| Nematic Liquid Crystal Composition | 5PPN | 12 | Helical Pitch=3.5 µm |
| | 2PPN | 5 | |
| | 5OPPN | 10 | Nematic Liquid Crystal |
| | 6OPPN | 5 | Composition: Δn=0.241 |
| | 3PGPN | 9 | |
| Nematic Liquid Crystal Composition | 5PPN | 12 | Helical Pitch=3.5 µm |
| | 2PPN | 5 | |
| | 5OPPN | 10 | Nematic Liquid Crystal |
| | 6OPPN | 5 | Composition: Δn=0.241 |
| | 3PGPN | 9 | |
| | 3CPPN | 4 | |
| | 5CPPN | 4 | |
| | 3PPPN | 5 | |
| | Non-chiral CB15 | 13.5 | |
| Elastic Constant Adjuster | NPP7PPN | 20 | |
| | NUP7PP(2,2-F)N | 5 | |
| | NPP9PPN | 5 | |
| Chiral Compound | S2011 | 2.5 | |
| | Total | 100 | |

### Example 6

| Component | Code | Ratio/wt% | Parameters of the liquid crystal cell and its performance data |
|---|---|---|---|
| Nematic Liquid Crystal Composition | 5PPN | 20.55 | Helical Pitch=1 µm |
| | 2PPN | 5 | |
| | 5OPPN | 11 | |
| | 6OPPN | 5 | |
| | 3PGPN | 11 | |
| | 5CPPN | 6 | |
| | 5PPPN | 3 | Nematic Liquid Crystal |
| Elastic Constant Adjuster | NPP7PPN | 20 | Composition: Δn=0.245 |
| | FPP7PPF | 10 | |
| Chiral Compound | S2011 | 8 | |
| Dichroic Dye | Dichroic Dye | 0.45 | |
| | Total | 100 | |

### Example 7

| Component | Code | Ratio/wt% | Parameters of the liquid crystal cell and its performance data |
|---|---|---|---|
| Nematic Liquid Crystal Composition | E7 | 70.8 | Helical Pitch=3 µm |
| | | | Nematic Liquid Crystal |
| Elastic Constant Adjuster | NPP7PPN | 28 | Composition: Δn=0.225 |
| Chiral Compound | R1011 | 1.2 | |
| | Total | 100 | |

### Example 8

| Component | Code | Ratio/wt% | Parameters of the liquid crystal cell and its performance data |
|---|---|---|---|
| Nematic Liquid Crystal Composition | E7 | 50.8 | Helical Pitch=1 µm |
| | 3CCV | 20 | |
| Elastic Constant Adjuster | NPP7PPN | 28 | Nematic Liquid Crystal |
| Chiral Compound | R1011 | 1.2 | Composition: Δn=0.161 |
| | Total | 100 | |

### Performance Test Results:

### 1. Optical Performance at 25° C

| Code | P /µm | Cell Gap /µm | P State | | FC State (initial) | | FC State (5min) | | Stability Of FC State |
|---|---|---|---|---|---|---|---|---|---|
| | | | T/% | T/% | H/% | T/% | H/% | T/% | ΔH/% |
| Comparative Example 1 | 4 | 20 | 84.6 | 2.09 | 74.9 | 79.36 | 78.3 | 60.19 | 19.17 |
| Comparative Example 2 | 10 | 20 | | | Failure to drive to FC state | | | | |
| Comparative Example 3 | 1 | 20 | 85.1 | 2.34 | 78.9 | 75.36 | 80.2 | 60.22 | 15.14 |
| Example 1 | 1 | 20 | 84.5 | 2.12 | 54.5 | 90.01 | 55.6 | 86.01 | 4.00 |
| Example 2 | 2 | 20 | 84.5 | 1.45 | 68.9 | 89.45 | 71.7 | 85.44 | 4.01 |
| Example 3 | 2.5 | 20 | 84.4 | 2.14 | 69.8 | 88.97 | 72.0 | 81.61 | 7.36 |
| Example 4 | 3 | 20 | 84.5 | 1.94 | 70.3 | 87.83 | 73.5 | 79.78 | 8.05 |
| Example 5 | 3.5 | 20 | 84.3 | 2.27 | 72.9 | 87.12 | 75.5 | 77.23 | 9.89 |
| Example 6 | 1 | 15 | 33.1 | 1.51 | 20.1 | 82.22 | 22.0 | 78.15 | 4.07 |
| Example 7 | 3 | 20 | 86.0 | 2.10 | 73.6 | 85.20 | 77.5 | 77.01 | 8.19 |
| Example 8 | 1 | 20 | 84.9 | 2.22 | 63.5 | 85.36 | 65.6 | 78.06 | 7.50 |

Examples 7 and 8 use commercially available ordinary nematic liquid crystal composition E7 to further verify the feasibility of the composition of the invention.

In Comparative Example 1, when the helical pitch was set to 4 µm, both the initial haze and haze stability deteriorated significantly, with an absolute change in foggy state reaching nearly 20%.

In Comparative Example 2, when the helical pitch was set to 10 µm, the excessively large pitch hindered the formation of a polydomain structure. When driving to the foggy state, the device exhibited visibly low haze with poor stability. When tested using the WGT-S haze meter, the extremely low and rapidly fluctuating haze caused signal capture errors, rendering measurements impossible. Consequently, the light modulating device essentially lost at least one stable foggy state.

In Comparative Example 3, when Δn of the nematic liquid crystal composition was less than 0.15, even with a helical pitch ≤3.5 µm, both the initial haze and haze stability failed to meet the objectives of the present invention, with an initial haze <80% and an absolute change in haze stability >10%.

From the embodiments of the present invention, it can be observed that when Δn≥0.15, as the helical pitch P increases, the initial haze of the fog state gradually decreases while the stability of the foggy state progressively deteriorates. When the helical pitch ≤3.5 µm, the initial haze remains ≥80% with absolute haze variation not exceeding 10%. Meanwhile, due to the effect of elastic constant adjusters, a lower planar haze level was achieved, with transmitted haze values all ≤10%, and more preferably ≤3%.

### 2. VT Curve

For the Comparative Examples 1-2 and Examples 1-7, when the helical pitch P=1 µm, the typical bistable characteristic curve is an inverted " 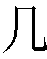 " shape, where the " 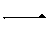 " area in the inverted " 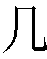 " shape is the scattering state adjustment area. The FC driving voltage is within the voltage range of the " 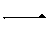 " in the inverted " 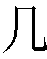 " shape. A wider horizontal segment indicates broader adjustable capability of the scattering state. As the helical pitch increases, the voltage range of the " 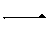 " in the inverted " 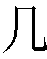 " shape of the bistable characteristic curve gradually shortens until it disappears, and the adjustable range of the FC scattering state also gradually narrows. When the helical pitch is too large, the bistable characteristic curve of the inverted " 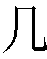 " shape is lost. For example, in Comparative Examples 1 and 2, when the helical pitch is ≥4 µm, the VT curve shows a loss of the bistable characteristic trend.

Although several exemplary embodiments have been described in detail above, the disclosed embodiments are exemplary and not restrictive. Those skilled in the art will readily recognize that many other modifications, changes, and/or substitutions are possible in the exemplary embodiments without substantially departing from the novel teachings and advantages of this disclosure. Therefore, all such modifications, changes, and/or substitutions are intended to be included within the scope of this disclosure as defined by the appended claims.

### Industrial Applicability:

The liquid crystal composition and its light modulating device involved in the invention can be applied in the field of liquid crystals.

## Claims

1. A liquid crystal composition, comprising: at least one nematic liquid crystal composition, at least one chiral compound, and at least one elastic constant adjuster, where the liquid crystal composition's birefringence Δn ≥ 0.15, and the helical pitch P ≤ 3.5 µm.

2. The liquid crystal composition according to claim 1, wherein the nematic liquid crystal composition is selected from at least one of the formula I: 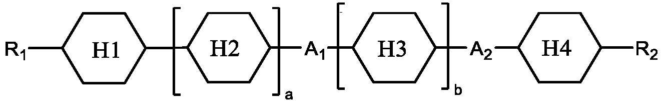
the elastic constant adjuster is selected from at least one of the formula II:
R3-MG1-Y1-X-Y2-MG2-R4 II;
wherein,
R1 and R2 each independently represent -CN, -Cl, -NCS, or an chain alkyl group with 1-25 carbon atoms where one or more nonadjacent -CH₂- groups in the chain alkyl group may be independently replaced by -O-, -S-, -NH-, -N(CH₃)-, -CO-, -COO-, -OCO-, -OCOO-, -SCO-, - COS-, -CH=CH-, -CH=CF-, -CF=CF-, or -C≡C-, and one or more H atoms in the chain alkyl group may be independently replaced by -CN or -CH₃,
A1 and A2 each independently represent -COO-, -OCO-, -OCOO-, -OCH₂-, -CH₂O-, -CF₂O-, -(CH₂)₂-, -C≡C-, -CH=CH-, -CF₂CF₂-, -CF=CF-, -CH=CH-COO-, -OCO-CH=CH-, or a single bond,
H1-H4 each independently represent a first ring structure , which consists of at least one of the following: 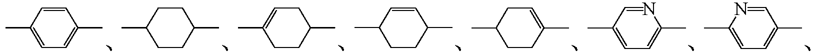 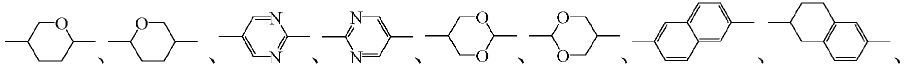 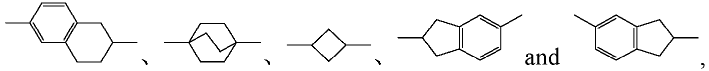 and one or more H atoms in the first ring structure may be independently replaced by halogen, a chain alkyl group with 1 to 10 C atoms or ester group,
a represents 0 or 1,
b represents 0, 1, or 2,
R3 and R4 each independently represent -H, -Cl, -CN, -NCS or a chain alkyl group with 1 to 25 C atoms where one or more H atoms may be independently substituted by halogen or CN and one or more nonadjacent -CH₂- may be independently replaced by-O-, -S-, -NH-, -N(CH₃)-, -CO-, -COO-, -OCO-, -OCOO-, -SCO-, -COS-, -CH=CH-, -CH=CF-, -CF=CF- or - C≡C- in such a manner that two -O- are not directly adjacent to one another,
X is a straight-chain alkyl group with 1, 3 or 5-40 C atoms or a branched alkyl group with 3 or 5-40 C atoms where one or more nonadjacent -CH2- may be independently replaced by - O-, -S-, -NH-, -N(CH3)-, -CO-, -COO-, -OCO-, -OCOO-, -SCO-, -COS-, -CH=CH-, -CH=CF-, -CF=CF-, -C≡C- or -CH(CN)- in such a manner that no two -O- are adjacent to one another or no two groups selected from -OCO-, -SCO-, -OCOO-, -COS-, -COO- and - CH=CH- are adjacent to each other,
Y1 and Y2 each independently represent -O-, -CH=CH-, -CF₂O-, -OCF2-, -CF2CF2- or a single bond, and
MG1 and MG2 each independently represent a mesogenic group.

3. The liquid crystal composition according to claim 1, wherein the mesogenic group is selected from the group of formula III 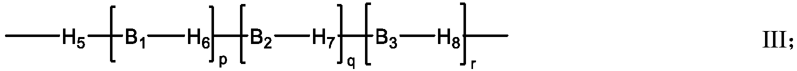 wherein,
H5-H8 each independently represent a second ring structure, which consists of at least one of the following: 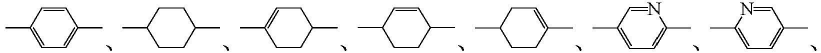 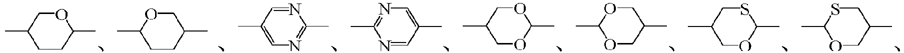 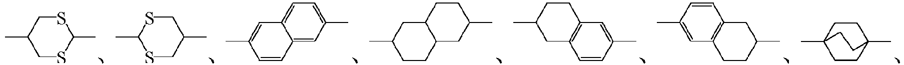 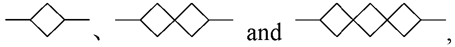 and 1-4 H atoms in the second ring structure may be independently replaced by halogen, CN or a chain alkyl group with 1-7 C atoms where at least one -CH₂- may be replaced by -CHO-, -CO-, -COO- or -OCO- and at least one H atom may be substituted by F or Cl,
B1, B2 and B3 each independently represent -OCOO-, -OCH₂-, -CH₂O-, -CF₂O-, -(CH₂)₂-, -(CH₂)₄-, -C≡C-, -CH=CH-, -CF₂CF₂-, -CF=CF-, -CH=CH-COO-, -OCO-CH=CH- or a single bond,
p, q and r is 0 or 1.

4. The liquid crystal composition according to claim 2, wherein X is -(CH₂)ₙ-, and n is an odd number from 3 to 15.

5. The liquid crystal composition according to claim 1, wherein the chiral compound accounts for 0.1-20% of the total mass of the liquid crystal composition.

6. The liquid crystal composition according to claim 1, wherein the liquid crystal composition further includes at least one dichroic dye.

7. A light modulating device comprising the liquid crystal composition as defined in any one of claim 1-9, comprising: a first transparent conductive base layer, a second transparent conductive base layer, and a liquid crystal layer disposed between the first transparent conductive base layer and the second transparent conductive base layer, wherein the liquid crystal layer contains a liquid crystal composition according to any one of claims 1 to 6.

8. The light modulating device according to claim 7, wherein the haze of the transparent state is no more than 5%.

9. The light modulating device according to claim 7, wherein the haze of the foggy state is no less than 80%.

10. The light modulating device according to claim 7, wherein the absolute change in haze stability of the device is not exceeding 10%.
